# EUROPÄISCHE PATENTSCHRIFT

(11) **EP 1 004 587 B1**
(45) Veröffentlichungstag und Bekanntmachung des Hinweises auf die Patenterteilung: **14.07.2004**
(21) Anmeldenummer: 99120147.6
(22) Anmeldetag: 08.10.1999
(51) Int. Cl.: C07F 7/18

(54) **3-Methacryloxy- und 3-Acryloxyisobutylalkoxysilane**
3-Methacryloxyisobutylalkoxysilanes and 3-acryloxyisobutylalkoxysilanes
3-Methacryloxyisobutylalkoxysilanes et 3-acryloxyisobutylalkoxysilanes

(30) Priorität: 25.11.1998 DE 19854218
(43) Veröffentlichungstag der Anmeldung: 31.05.2000
(73) Patentinhaber: Degussa AG, 40474 Düsseldorf (DE)
(72) Erfinder: Frings, Albert-Johannes, Dr., 79618 Rheinfelden (DE); Larson, Gerald Louis, Prof.Dr., Newton, Pennsylvania 18940 (US); Gänser, Andrea, 79618 Rheinfelden (DE)

(56) Entgegenhaltungen:
- EP-A- 0 483 480

## Beschreibung

Die vorliegende Erfindung betrifft neue 3-Organo-2-methylpropylalkoxysilane. Solche Verbindungen werden auch als 3-Organoisobutylalkoxysilane bezeichnet.

Ferner betrifft die vorliegende Erfindung das Verfahren zur Herstellung von 3-Organo-2-methylpropylalkoxysilanen sowie ihre Verwendung.

Organofunktionelle Alkoxysilane finden meist spezielle technische Anwendungen oder werden als Zwischenprodukte eingesetzt.

Beispielsweise verwendet man 3-Aminopropyltrialkoxysilane, 3-Aminopropylmethyldialkoxysilane, N-Aminoethyl-3-aminopropyltrimethoxysilan, N-Aminoethyl-3-aminopropyl-methyldimethoxysilan, 3-Mercaptopropyl-trimethoxysilan oder auch 3-Methacryloxypropyltrimethoxysilan als Haftvermittler zwischen anorganischen Materialien und organischen Polymeren, als Vernetzungsmittel oder als Mittel zur Oberflächenmodifizierung Ebenfalls sind Verbindungen wie 3-Aminoisobutyltrialkoxysilane, 3-Aminoisobutylmethyldialkoxysilane, N-(2-Aminoethyl)3-amino-2-methylpropylalkoxysilane sowie N-(2-Aminoethyl)3-amino-2-methylpropylmethyldialkoxysilane bekannt (EP 0 676 403 A1, DE-PS 11 58 071, DE-AS 11 52 695).

Es ist auch bekannt, daß man durch Umsetzen von 3-Chlorpropyltrimethoxysilanen mit Kaliummethacrylat in Gegenwart eines Phasentransferkatalysators 3-Methacrylpropyltrimethoxysilan herstellen kann (EP 0 483 480 B1, EP 0 437 653 B1, DE-OS 44 37 667).

Der vorliegenden Erfindung lag die Aufgabe zugrunde, neue *Verbindungen* bereitzustellen.

Die gestellte Aufgabe wird erfindungsgemäß entsprechend den Angaben der Patentansprüche gelöst.

Es wurde nun gefunden, dass man durch Umsetzung eines 3-Chlor-2-methylpropyltrialkoxysilans oder eines 3-Chlor-2-methylpropylmethyldialkoxysilans mit Kaliummethacrylat oder Kaliumacrylat in Gegenwart eines Phasentransferkatalysators, wie er aus DE-OS 44 37 667, EP-PS 0 483 480 sowie EP-OS 0 437 653 hervorgeht, 3-Methacryloxy- bzw. 3-Acryloxyisobutylalkoxysilane der allgemeinen Formel I 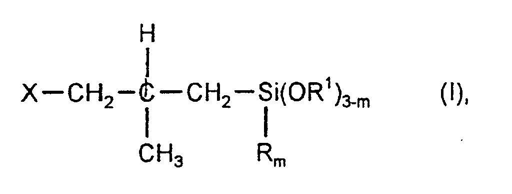 wobei
X: 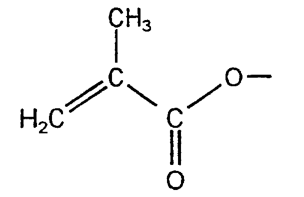 oder 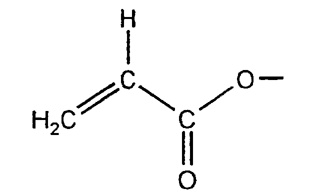 und
R: eine lineare Alkylgruppe mit 1 bis 4 C-Atomen,
R¹: eine lineare oder verzweigte Alkylgruppe mit 1 bis 3 C-Atomen
und
m: 0 oder 1
bedeuten,
mit hoher Selektivität herstellen kann.

Gegenstand der vorliegenden Erfindung sind daher 3-Methacryloxy- und 3-Acryloxyisobutylalkoxysilane der allgemeinen Formel I 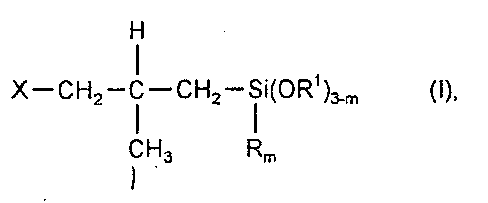 mit
X: 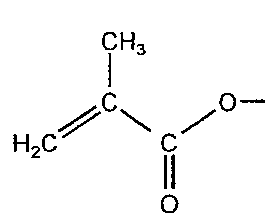 oder 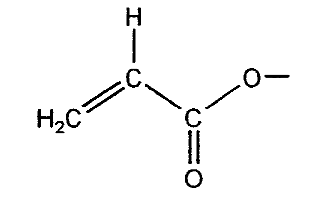 und
R: einer linearen Alkylgruppe mit 1 bis 4 C-Atomen,
R¹: einer linearen oder verzweigte Alkylgruppe mit 1 bis 3 C-Atomen
und
m: 0 oder 1.

Gegenstand der vorliegenden Erfindung ist auch das Verfahren zur Herstellung von 3-Methacryloxy- oder 3-Acryloxyisobutylalkoxysilanen der bereits oben genannten allgemeinen Formel (I), indem man Alkalimethacrylat oder Alkaliacrylat, vorzugsweise Kaliummethacrylat oder Kaliumacrylat, mit einem 3-Chlorisobutylalkoxysilan der allgemeinen Formel II, 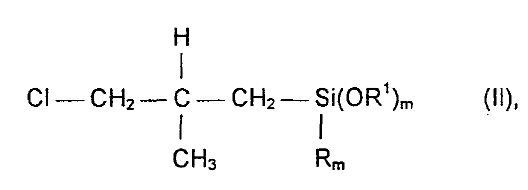 wobei R, R¹ und m wie oben definiert sind,
in Gegenwart mindestens eines Phasentransferkatalysators und gegebenenfalls in Gegenwart mindestens eines Stabilisators umsetzt und das Produktgemisch aufarbeitet.

Bevorzugt setzt man beim erfindungsgemäßen Verfahren 3-Chlorisobutyltrimethoxysilan, 3-Chlorisobutyltriethoxysilan, 3-Chlorisobutylmethyldimethoxysilan oder 3-Chlorisobutylmethyldiethoxysilan ein.

Im Allgemeinen führt man das vorliegende, so genannte "Phasentransfer-Verfahren" so aus, wie es aus EP 0 483 480 B1, EP 0 437 653 B1 und DE-OS 44 37 667 bereits hervorgeht. Es sei ausdrücklich darauf hingewiesen, dass der Inhalt der Patente und Patentanmeldungen unter EP 0 483 480 B1, EP 0 437 653 B1 und DE-OS 44 37 667 auch zur Offenbarung der vorliegenden Anmeldung gehört.

Die neuen Verbindungen der allgemeinen Formel I neigen bei höherer Temperatur oder unter Einfluß von UV-Licht im Allgemeinen zur Polymerisation. Durch Zusatz eines an sich bekannten Stabilisators oder einer Kombination solcher Stabilisatoren, wie sie insbesondere, aber nicht ausschließlich, aus DE-OS 44 37 666, DE-OS 44 37 667, US 5 103 032, EP-A 0 620 206, EP-A 0 472 438, EP-A 0 520 477 zu entnehmen sind, - beispielsweise: Benzochinone; Hydrochinone, wie 2,5-Di-t-butylhydrochinon; Monoalkylether von Hydrochinonen; Amide organischer Säuren; Isocyanurate; organofunktionelle sowie sterisch gehinderte Phenole, wie 4-(2-Aminoethyl)phenol, 4-(N,N-Dimethylaminomethyl)-2,6-di-t-butylphenol, 4-(N,N-Dibutylaminomethyl)-2,6-di-t-butylphenol, Tetrakis-[methylen-3-(3',5'-di-t-butyl-4'-hydroxyphenyl)propionat]methan, 2-t-Butyl-6-(3'-tbutyl-5'-methyl-2'-hydroxybenzyl)-4-methylphenylacrylat, 4,4'-Butyliden-bis(2-tbutyl-5-methylphenol), 2,2'-Butyliden-bis(6-t-butyl-4-methylphenol), 2,2'-Ethylidenbis(4,6-dibutylphenol), 2,2'-Methylen-bis(4-methyl-6-t-butylphenol), 4,4'-Methylenbis(2,6-di-t-butylphenol), n-Octadecyl-3-(3',5'-di-t-butyl-4'-hydroxyphenyl)-propionat, 2-t-Butyl-4-methoxyphenol, 2,4-Di-methyl-6-t-butylphenol, 2,6-Di-t-butylphenol, 2,6-Di-t-butyl-4-methylphenol, 2,6-Di-t-butyl-4-(∝-dimethyl)aminomethylphenol, 2,6-Di-t-butyl-4-ethylphenol, 2,6-Di-t-butyl-4-methoxyphenol, (Mono-, Di-, Tri-)∝-methylbenzylphenole; Alkylamine, wie Propylamin, 2,2,6,6-Tetramethylpiperidinooxyl, 4-Hydroxy-2,2,6,6-tetramethylpiperidinooxyl; aromatische Amine sowie N-substituierte Imine, wie N,N'-Diphenyl-p-phenylen-diamin, N,N'-Dinaphthyl-p-phenylendiamin, N,N'-Di-(1-methylheptyl)-p-phenylendiamin, N,N'-Di-(1-ethyl-3-methylpentyl)-p-phenylendiamin, N,N'-Di-(1,4-dimethylpentyl)-p-phenylendiamin, N,N'-Di-sek.-butyl-p-phenylendiamin, N-Phenyl-N'-cyclohexyl-p-phenylendiamin, N-Phenyl-N'-isopropyl-p-phenylendiamin, 4,4'-Dioctyl-diphenylamin, N-Methyl-bis(3,5-di-t-butyl-4-hydroxybenzyl)amin, N,N'-Diphenyl-p-chinondiimin, N,N'-Di-(1-methylheptyl)-p-chinondiimin, N,N'-Di-(1-ethyl-3-methylpentyl)-p-chinondiimin, N,N'-Di-(1,4-dimethylpentyl)-p-chinondiimin, N,N'-Di-sek.-butyl-pchinondiimin, N-Phenyl-N'-cyclohexyl-p-chinondiimin, N-Phenyl-N'-isopropyl-chinondiimin; Phenothiazine, wie Bis-(∝-methylbenzyl)phenothiazin, 3,7-Dioctylphenothiazin, Bis-(∝-dimethylbenzyl)phenothiazin, um nur einige zu nennen -, können die erfindungsgemäßen Verbindungen in geeigneter Weise sowohl bei der Synthese als auch danach stabilisiert werden.

Erfindungsgemäße 3-Methacryloxy- oder 3-Acryloxyisobutylalkoxysilane der bereits oben genannten allgemeinen Formel (I) können insbesondere als Haftvermittler in gefüllten Polymeren, als Haftvermittler in glasfaserverstärkten Kunststoffen und anorganisch gefüllten organischen Polymeren, als Komponente zum Coaten von Mineralwolle, als Komponente in kratzfesten Beschichtungen, beispielsweise bei Copolymerisation mit MMA in Lacken, als Haftvermittler in Kunststeinen, Kunststeinplatten bzw. Kunststeinformteilen, beispielsweise für Sanitärartikel, verwendet werden.

Gegenstand der vorliegenden Erfindung ist somit die Verwendung von 3-Methacryloxy- oder 3-Acryloxyisobutylalkoxysilanen der bereits oben genannten allgemeinen Formel (I) als Haftvermittler, als Beschichtungsmittel, als Komponente in Lacken, Kunststeinen und kratzfesten Beschichtungen sowie zum Modifizieren von Oberflächeneigenschaften.

Die vorliegende Erfindung wird durch die nachfolgenden Beispiele näher erläutert:

### Beispiele:

### Beispiel 1

### 3-Methacryloxyisobutyltrimethoxysilan (MAC-MEMO)

Die Durchführung der Synthese kann in einer beheizbaren Rührapparatur mit Zwangsrührung, Gaseinleitrohr, Rückflußkühler und Tropftrichter erfolgen.
Aus 547,9 g 32%iger Kaliummethylatlösung (KM-Lösung; entspricht 2,5 mol KM), verdünnt mit 153,7 g Methanol und 143,4 g Methacrylsäure (MAS; entspricht 1,7 mol MAS) stellt man bei einer Reaktionstemperatur < 35 °C ein Gemisch aus Kaliummethacrylat (KMA), Methanol und Methacrylsäure her, das so genannte 2/3-Neutralisat. Dabei fällt das KMA feinkristallin aus. Zu diesem Gemisch fügt man 1,213 g N,N'-Diphenyl-p-phenylendiamin (DPPD) hinzu. Anschließend leitet man ein Gasgemisch bestehend aus 92 Vol.-% N₂ und 8 Vol.-% O₂ unter Niveau ein. Dabei beobachtet man, dass das farblose bis schwach gelbe Reaktionsgemisch sich tief rotorange färbt. Das DPPD wird zum N,N'-Diphenyl-pchinondiimin (Diimin) oxidiert, welches photometrisch aus der Extinktion beim Absorptionsmaximum von 442 nm bestimmt werden kann.

Zur vollständigen Neutralisation werden bei einer Reaktionstemperatur < 35 °C weitere 71,7 g = 0,8 mol MAS zugegeben. Der pH-Wert des Reaktionsgemisches (Bestimmung nach Vermischen von 1 Teil des Reaktionsgemisches in 1 Teil VE-Wasser) beträgt ca. 10 ± 0,5.

Zu dieser rotorangen methanolischen KMA-Suspension fügt man 571.2 g = 2,6 mol 3-Chlor-2-methylpropyltrimethoxysilan (CMPTMO) und 21,9 g = 0.03 mol Tetrabutylammoniumbromid (TBAB als Phasentransferkatalysator). Anschließend entfernt man destillativ das Methanol; zuletzt bei ca. 30 mbar und einer Sumpftemperatur von ca. 50 °C.

Nachdem das Methanol nahezu quantitativ (< 0,1 Fl.-% GC WLD) abgetrennt wird, erhöht man die Temperatur im Sumpf auf 105 °C, während das Gemisch kräftig gerührt wird. Nach ca. 9 Stunden Reaktionszeit führt man die Nachreaktion bei 135 °C über 2 Stunden durch. Nach Abkühlen wird filtriert: Ausbeute ca. 226 g feuchtes Salz und 579,8 g rotoranges Mutterfiltrat mit einem Diimingehalt von 79 g/kg (photometrisch bestimmt). Dem Mutterfiltrat werden 3,21 g Jonol zugegeben. Nach fraktionierter Destillation im Vakuum werden 250,4 g = 0.96 mol MAC-MEMO mit einer Reinheit von 98,5 Fl.-% GC WLD isoliert. Die Ausbeute beträgt ca. 39 %, bezogen auf MAS bzw. CMPTMO. Das Produkt hat bei einem Druck von < 1 mbar einen Siedepunkt von ca. 69 °C.

### Beispiel 2

### 3-Acryloxyisobutyltrimethoxysilan (MAC-ACMO)

Die Vorgehensweise entspricht derjenigen, wie oben unter MAC-MEMO beschrieben. Anstatt 215 g MAS werden jedoch in Summe 180 g = 2,5 mol Acrylsäure eingesetzt.

Nach fraktionierter Destillation im Vakuum werden 272,8 g = 1,17 mol MAC-ACMO mit einer Reinheit von 98,2 Fl.-% GC WLD isoliert. Die Ausbeute beträgt ca. 47 %, bezogen auf MAS. Das Produkt siedet im Vakuum < 1 mbar bei ca. 66 °C.

## Patentansprüche

1. 3-Methacryloxy- und 3-Acryloxyisobutylalkoxysilane der allgemeinen Formel (I) 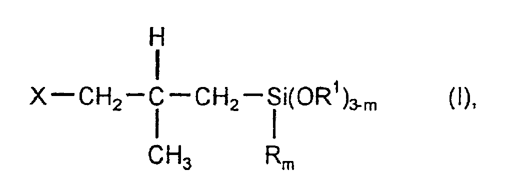 mit
X: 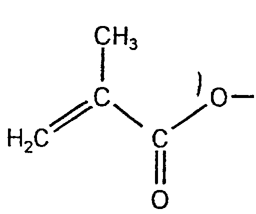 oder 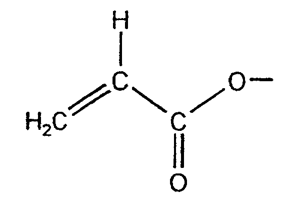 und
R: einem linearen Alkylrest mit 1 bis 4 C-Atomen,
R¹: einem linearen oder verzweigten Alkylrest mit 1 bis 3 C-Atomen
und
m: 0 oder 1.

2. Verfahren zur Herstellung von 3-Methacryloxy- oder 3-Acryloxyisobutylalkoxysilanen der allgemeinen Formel I, 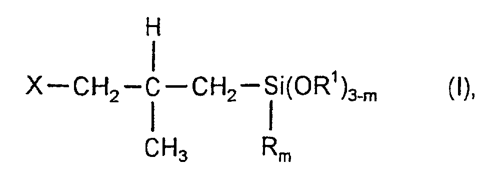 mit
X: 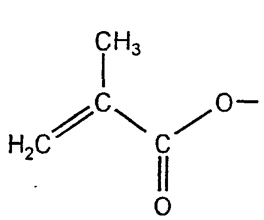 oder 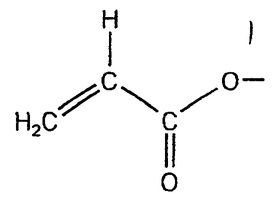 und
R: einem linearen Alkylrest mit 1 bis 4 C-Atomen,
R¹: einem linearen oder verzweigten Alkylrest mit 1 bis 3 C-Atomen
und
m: 0 oder 1,
indem man Alkalimethacrylat oder Alkaliacrylat mit einem 3-Chlorisobutylalkoxysilan der allgemeinen Formel II 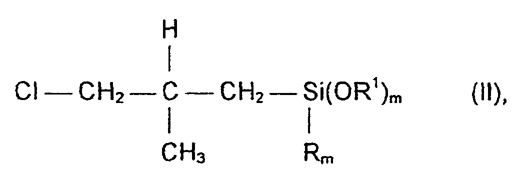 wobei R eine lineare Alkylgruppe mit 1 bis 4 C-Atomen darstellt, R' eine lineare oder verzweigte Alkylgruppe mit 1 bis 3 C-Atomen bedeutet und m gleich 0 oder 1 ist,
in Gegenwart mindestens eines Phasentransferkatalysators und gegebenenfalls in Gegenwart mindestens eines Stabilisators umsetzt und das Produktgemisch aufarbeitet.

3. Verfahren nach Anspruch 2,
**dadurch gekennzeichnet,**
**dass** man 3-Chlorisobutyltrimethoxysilan, 3-Chlorisobutyltriethoxysilan, 3-Chlorisobutylmethyldimethoxysilan oder 3-Chlorisobutylmethyldiethoxysilan einsetzt.

4. Verwendung von 3-Methacryloxy- oder 3-Acryloxyisobutylalkoxysilanen der allgemeinen Formel I nach den Ansprüchen 1 bis 3 als Haftvermittler, als Beschichtungsmittel, als Komponente in Lacken, Kunststeinen und kratzfesten Beschichtungen sowie zum Modifizieren von Oberflächeneigenschaften.

## Claims

1. A 3-methacryloxy- or 3-acryloxyisobutylalkoxysilane of the general formula (1) 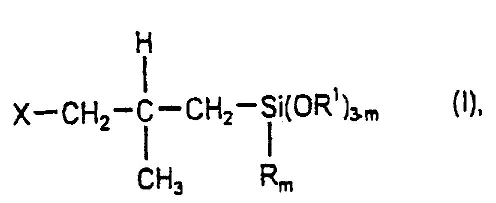 where
x is 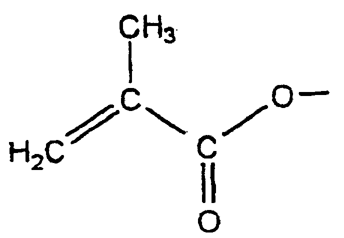 or 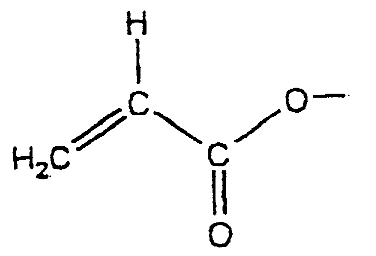 and
R is a linear alkyl radical having from 1 to 4 carbon atoms,
R¹ is a linear or branched alkyl radical having from 1 to 3 carbon atoms, and
m is 0 or 1.

2. A process for the preparation of a 3-methacryloxy- or 3-acryloxyisobutylalkoxysilane of the general formula I 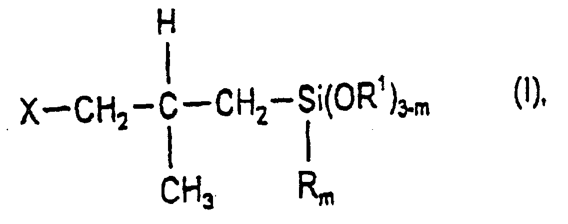 where
x is 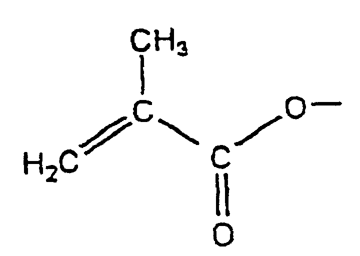 or 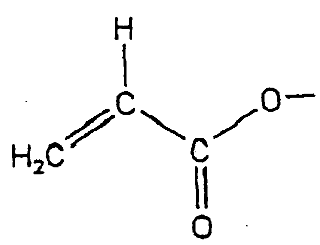 and
R is a linear alkyl radical having from 1 to 4 carbon atoms,
R¹ is a linear or branched alkyl radical having from 1 to 3 carbon atoms, and
m is 0 or 1,
by reacting alkali metal methacrylate or alkali metal acrylate with a 3-chloroisobutylalkoxysilane of the general formula II 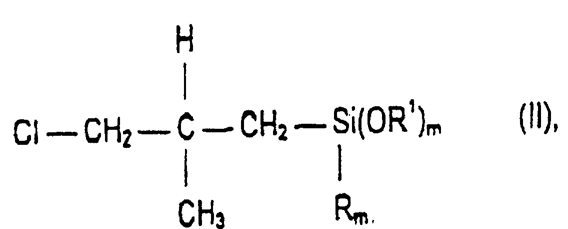 where R is a linear alkyl group having from 1 to 4 carbon atoms, R¹ is a linear or branched alkyl group having from 1 to 3 carbon atoms, and m is 0 or 1,
in the presence of at least one phase transfer catalyst and optionally in the presence of at least one stabilizer, and working up the product mixture.

3. A process according to claim 2,
**characterized in that**
3-chloroisobutyltrimethoxysilane, 3-chloroisobutyltriethoxysilane, 3-chloroisobutylmethyldimethoxysilane or 3-chloroisobutylmethyldiethoxysilane is used.

4. The use of a 3-methacryloxy- or 3-acryloxyisobutylalkoxysilane of the general formula I according to any of claims 1 to 3 as an adhesion promoter, as a coating composition, as a component in paints, artificial stones and scratch-resistant coatings and for modifying surface properties.

## Revendications

1. 3-Méthacryloxy et 3-acryloxyisobutylalkoxysilanes de formule générale (I) 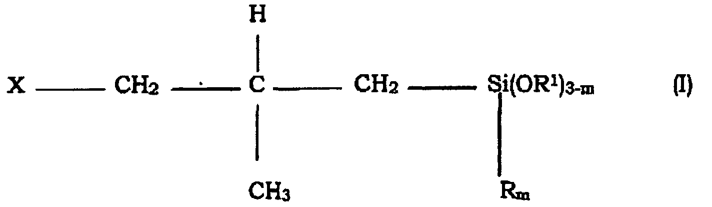 dans laquelle X reprêsente 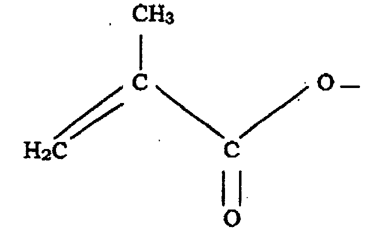 ou 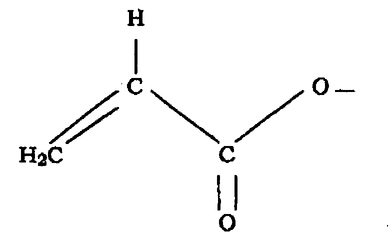 et
R représente un reste alkyle linéaire ayant de 1 à 4 atomes de carbone,
R¹ représente un reste alkyle linéaire ou ramifié ayant de 1 à 3 atomes de carbone
et
m est égal à 0 ou 1.

2. Procédé de production de 3-méthacryloxy ou de 3-acryloxyisobutylalkoxysilanes de formule générale I 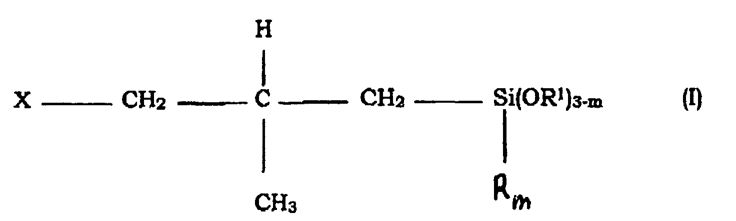 dans laquelle X représente 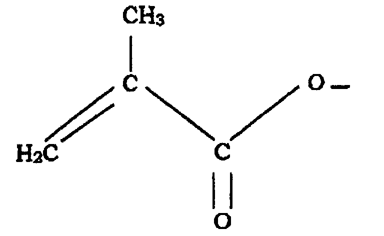 ou 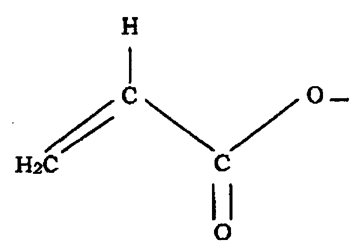 et
R représente un reste alkyle linéaire ayant de 1 à 4 atomes de carbone,
R¹ représente un reste alkyle linéaire ou ramifié ayant de 1 à 3 atomes de carbone
et
m est égal à 0 ou 1.
dans lequel on fait réagir un méthacrylate de métal alcalin ou un acrylate de métal alcalin avec un 3-chloroisobutylalkoxysilane de formule générale II 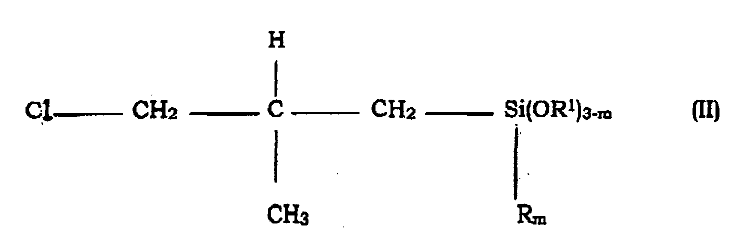 dans laquelle R représente un groupe alkyle ayant de 1 à 4 atomes de carbone,
R¹ signifie un groupe alkyle linéaire ou ramifié ayant de 1 à 3 atomes de carbone
et
m est égal à 0 ou 1,
en présence d'au moins un catalyseur de transfert de phase et éventuellement en présence d'au moins un agent stabilisant, et on purifie le mélange de produits.

3. Procédé selon la revendication 2,
**caractérisé en ce qu'**
on met en oeuvre le 3-chloroisobutyltriméthoxysilane, le 3-chloroisobutyltriéthoxysilane, le 3-chloroisobutylméthyldiméthoxy-silane, ou le 3-chloroisobutylméthyldiéthoxysilane.

4. Utilisation des 3-méthacryloxy ou des 3-acryloxyisobutylalkoxysilanes de formule générale I selon les revendications 1 à 3, en tant qu'adjuvant d'adhésion, comment agent de recouvrement, comme composant dans des laques, des pierres artificielles et des revêtements résistants aux éraflures, ainsi qu'en vue de la modification des propriétés de surface.
